# EUROPÄISCHE PATENTSCHRIFT

(11) **EP 4 222 321 B1**
(45) Veröffentlichungstag und Bekanntmachung des Hinweises auf die Patenterteilung: **14.05.2025**
(21) Anmeldenummer: 21789611.7
(22) Anmeldetag: 23.09.2021
(51) Int. Cl.: E02D 27/42, E04H 12/16

(54) **FUNDAMENT FÜR EINE WINDKRAFTANLAGE**
FOUNDATION FOR A WIND MOTOR
FONDATION D'UNE ÉOLIENNE

(30) Priorität: 04.10.2020 DE 102020125918
(43) Veröffentlichungstag der Anmeldung: 09.08.2023
(73) Patentinhaber: Smart & Green Mukran Concrete GmbH, 18546 Sassnitz (DE)
(72) Erfinder: PRASS, Gregor, 22455 Hamburg (DE); SCHRIEFER, Christoph, 19230 Redefin (DE)
(74) Vertreter: Klickow & Wetzel PartGmbB
(86) Internationale Anmeldenummer: PCT/EP2021/076283
(87) Internationale Veröffentlichungsnummer: WO 2022/069348

(56) Entgegenhaltungen:
- WO-A1-2018/055446
- WO-A1-2020/012345
- DE-A1- 102012 009 850
- DE-A1- 102019 109 503
- US-A1- 2010 043 318

## Beschreibung

Die Erfindung betrifft ein Fundament für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, mit einem zweiten sich im Wesentlichen horizontal erstreckenden Abschnitt als Fundamentkörper, der sich in Kontakt mit dem Boden befindet, der wenigstens zwei Horizontalelemente mit wenigstens einem Auflagerabschnitt an seinem inneren Ende aufweist, wobei der erste Abschnitt oberhalb der wenigsten zwei Auflagerabschnitte des zweiten Abschnitts angeordnet ist, und mit einem dritten Abschnitt der unterhalb der wenigsten zwei Auflagerabschnitte des zweiten Abschnitts angeordnet ist.

Fundamente für Windkraftanlagen werden im Wesentlichen als In-Situ-Betonfundamente ausgeführt. Dafür wird am Errichtungsort eine Grube ausgehoben, diese wird mit einer Sauberkeitsschicht versehen. Anschließend werden die Schalung und die Bewehrung errichtet und das Ganze mit Beton vor Ort gefüllt. Dabei wird ein flächiger Körper ggf. mit einem Sockel errichtet, siehe beispielsweise US 20160369520 A1 oder WO 2008/036934 A2. Neben dem Transportaufwand durch die Lieferung des Betons, der Schalung und der Bewehrung ist dieses vor Ort sehr arbeitsintensiv. Auch ist die Qualitätssicherung aufwendig bzw. je nach Witterung auch problembehaftet. Weiterhin ist der Rückbau nach dem Ende der Lebensdauer der Windkraftanlage teuer und sehr aufwendig. Dieses gilt insbesondere für Betontürme für Windkraftanlagen, die optimaler Weise ein Durchmesser zu Höhenverhältnis von ca. 1:10 aufweisen, wodurch Durchmesser von 8 bis 15 m keine Seltenheit sind. Fundamente für solche Türme werden bisher in Ortbeton hergestellt. Weiterhin müssen Bereiche vorgesehen sein, in denen die Vorspannelemente des Turms am Fundament angebracht und vorgespannt werden können. Das Vorspannen erfolgt mit dafür vorgesehenen Vorrichtungen, die in die Vorspannbereiche gebracht werden müssen. Als Widerlager für das Vorspannen bzw. für das Anbringen der Vorspannelemente (Litzen/Seile) werden im Inneren des Fundaments für gewöhnlich aufwendige Kragstrukturen vorgesehen, unter denen dann die Vorrichtungen gebracht werden. Diese Strukturen sind aufwendig und verbesserungswürdig.

Weiterhin gibt es prinzipiell Bedarf, Fundamente von Windkraftanlagen aus vorgefertigten Elementen zu errichten, womit die vorgenannten Probleme reduziert bzw. eliminiert werden könnten. Prinzipiell ist vorteilhaft, dass bei einem Vorfertigen die Bauteile unter definierten Bedingungen standardisiert produziert werden können. Auch reduziert sich der Arbeitsaufwand vor Ort. Hierfür wurden verschiedene Ansätze im Stand der Technik beschrieben.

Beispielsweise zeigt WO 2008/036934 A2 eine Kombination aus vorgefertigten Elementen und klassischem Schalungs-/Bewehrungsbau. Dadurch werden die zuvor genannten Nachteile nur unwesentlich reduziert.

Weitere Ansätze für das Herstellen von Fundamenten für Windkraftanlagen aus vorgefertigten Bauteilen sind wie folgt im Stand der Technik gezeigt:
EP 1 058 787 B1 offenbart ein Fundament für eine Windkraftanlage, um offshore Windkraftanlagen zu errichten, die vollständig vormontiert - also inklusive Fundament - transportiert und am Errichtungsort auf den Meeresgrund in einem Stück abgesetzt werden. Das Fundament weist dabei einzelne vorgefertigte Segmente auf. Diese können aus Beton bestehen. Es sind ein flächiger Abschnitt und ein Sockelabschnitt offenbart. Der Sockelabschnitt besteht aus Kreisringen. Der flächige Abschnitt besteht aus einzelnen in der Grundfläche trapezförmigen Grundelementen, auf dem der Sockelabschnitt am inneren Ende vertikal montiert ist, der vertikale Durchgänge aufweist. Die flächigen Grundabschnitte sind mittels Nut-Feder-Verbindungen miteinander verbunden. Der Sockelabschnitt und der flächige Grundabschnitt sind mit einer Diagonalstrebe zur Aussteifung verbunden. Die Kreissegmente des Sockelabschnitts weisen ebenfalls vertikale Durchgänge auf. In die Durchgänge werden Verbindungskabel/Ankerstangen eingebracht. Falls die Fundamentteile aus Beton vorgesehen sind, ist unterhalb der Grundelemente im Bereich der vertikalen Durchgänge ein flacher Widerlagerring aus Stahl vorgesehen. Mit den Verbindungskabeln/Ankerstangen wird das Fundament montierten und die Windkraftanlage am Fundament befestigt. Zusätzlich sind horizontale Durchgänge in Grundelementen und Diagonalstreben vorgesehen, in denen ebenfalls Verbindungskabel/Ankerstangen angeordnet werden, mit denen die Elemente des Fundaments horizontal vorgespannt werden. Erst durch das horizontale Vorspannen wird das Fundament belastbar fertiggestellt. Somit offenbart EP 1 058 787 B1 ein Fundament aus einzelnen vorgefertigten Betonteilen, mit einem Flächenabschnitt und einem Sockelabschnitt, wobei zumindest diese beiden Abschnitte vertikal und horizontal miteinander verbunden werden.

Nachteilig hierbei ist, dass erhebliche Kosten und erheblicher Arbeitsaufwand für das Verbinden der Elemente und das Herstellen des statisch belastbaren Fundaments notwendig sind.

EP 1 074 663 A1 offenbart ein Fundament für eine Windkraftanlage mit einem Zentralkörper als Sockel mit daran angeschraubten sich seitlich erstreckenden sternförmig angeordneten Rippen/Vorsprüngen/Trägern. Rippen und Zentralkörper werden vor Ort horizontal miteinander verschraubt. Die Teile sind unter anderem aus Beton vorgefertigt und werden mittels LKW zur Baustelle angeliefert, per Kran angeordnet und vor Ort miteinander horizontal über Flansche und Verschraubungen verbunden. Weiterhin sind an der Außenseite der Rippen Anker notwendig, um einen hinreichenden Lastabtrag zu gewährleisten.

Nachteilig hierbei ist, dass auch hier erhebliche Kosten und erheblicher Arbeitsaufwand für Verbinden der Elemente und das Herstellen des statisch belastbaren Fundaments notwendig sind. Weiterhin sind zusätzliche Verankerungen notwendig.

WO 2004/101898 A2 offenbart ein Fundament für eine Windkraftanlage aus vorgefertigten Betoneinzelteilen, wobei entweder ein Zentralkörper vorgesehen ist, an dem Flächenkörper horizontal angeschraubt werden, oder das Fundament besteht ausschließlich aus Bauteilen, die sowohl einen flächigen Abschnitt und einen sockelartigen Abschnitt aufweisen, wobei diese dann horizontal miteinander mittels Verschraubung gegen Flansche verbunden werden.

Nachteilig hierbei ist, dass auch hier erhebliche Kosten und erheblicher Arbeitsaufwand für Verbinden der Elemente und das Herstellen des statisch belastbaren Fundaments notwendig sind.

EP 2 182 201 A1 offenbart zwei unterschiedliche Fundamente für eine Windkraftanlage. Bei beiden wird aus vorgefertigten Betonteilen nach einer entsprechenden Anlieferung vor Ort ein Fundament errichtet. Beide enthalten einen flächigen Abschnitt und einen sockelartigen Abschnitt. In Variante 1 ist ein Zentralkörper vorgesehen. Die Rippen/Flächenelemente werden an diesen angesetzt. Montiert bilden die Rippen einen polygonalen Körper. Der Zentralkörper weist einen Vorsprung auf, der von einem entsprechenden Rücksprung an den Rippen umgriffen wird. Die Rippen werden zusätzlich mittels eines Zurrrings gegen den Zentralkörper arretiert. An den Flächenköpern sind Ankerstangen zur Montage des Turms vorgesehen. Bei der zweiten Variante weisen die Rippen horizontal vorspringende Ankerelemente auf, die sich im montierten Zustand radial in das Zentrum des Fundaments erstrecken. Unterhalb und oberhalb der Anker sind Platten vorgesehen. In den so gebildeten Hohlraum wird der Ortbeton eingebracht, um die Anker miteinander zu verbinden und einen Zentralkörper zu bilden. Bei beiden Varianten wird das horizontale Verbinden vereinfacht. Allerdings weisen sowohl die Rippen als auch der Zentralkörper Dimensionen und Massen auf, die einen Transport kompliziert gestalten.

WO 2017/141095 A1 und WO 2017/141098 A1 offenbaren ebenfalls ein Fundament für eine Windkraftanlage. Dieses Fundament wird aus vorgefertigten Rippenkörpern gebildet, die an ihrem inneren Ende einen Sockelabschnitt aufweisen, auf dem der Turm der Windkraftanlage angeordnet wird. Die Rippen erstrecken sich strahlenförmig nach außen. Die Abschnitte zwischen den Rippen werden in einer weiteren Ausführungsform mit Plattenelementen, die gegen die Rippen mit Flanschen geschraubt werden, zur Herstellung einer Platte gefüllt. Mittig ist anstelle eines Zentralkörpers eine Stahlhülse vorgesehen, die mit im Rippeninneren vorgesehenen Bewehrungen und in inneren Hohlraum vorgesehenen Verstärkungsbalken verbunden ist. Die Rippen weisen eine Grundplatte auf. Auf der ein diagonales Verstärkungselement und der Sockelabschnitt einstückig angeordnet sind. Die Sockelabschnitte sind horizontal über Nut-FederElemente miteinander verbunden. Weiterhin weisen die Sockelabschnitte horizontale Öffnungen auf, in denen Spannelemente zum horizontalen Verbinden der Sockelabschnitte vorgesehen werden. Weiterhin sind in den Sockelabschnitten Ankerstangen für das Verbinden des Turms mit dem Fundament eingegossen. Weiterhin sind ebenfalls außenliegenden Bodenanker offenbart.

Nachteilig hierbei ist, dass auch hier erhebliche Kosten und erheblicher Arbeitsaufwand für Verbinden der Elemente und das Herstellen des statisch belastbaren Fundaments notwendig sind.

WO 2019/115622 A1 und WO 2019/201714 A2 offenbaren erste erfolgreiches Fundamente für Windkraftanlagen aus Betonfertigteilen für einen Stahlturm und für einen Betonturm für eine Windkraftanlage. Die Fundamente weisen zwei Abschnitte auf. Dabei sind Rippenelemente vorgesehen, die eine zentralen Abschnitt aufweisen, auf dem ein Sockelabschnitt vorgesehen ist. Auf dem Sockelabschnitt wird dann der Turm der Windkraftanlage angeordnet. Der Sockelabschnitt besteht dabei aus einzelnen Segmenten, die miteinander verbunden werden. Mittels Spanngliedern, die in Öffnungen im Zentralenabschnitt und in den Elementen des Sockelabschnitts vorgesehen sind, werden die Rippenelementen und die Sockelelemente miteinander verspannt. Bei Weiterentwicklungen dieser Fundamente haben sich überraschende und besonders effiziente Verbesserungen im Bereich des Sockels ergeben. Ein Fundament für eine Windkraftanlage entsprechend dem Oberbegriff des Anspruchs ist aus der WO2018/055446 A1 bekannt.

Aufgabe der Erfindung ist daher, die vorgenannten Nachteile zu überwinden und Fundamente für Windkraftanlagen, insbesondere für Windkraftanlagen mit Betontürmen, aus vorgefertigten Elementen wirtschaftlich errichtbar bzw. errichtbarer zu machen.

Gelöst wird die erfindungsgemäße Aufgabe dadurch, dass ein Sockel vorgesehen ist, der wenigstens aus dem ersten, sich vertikal erstreckende sockelartig ausgeführte Abschnitt, aus den wenigstens zwei Auflagerabschnitten des zweiten Abschnitts und aus dem dritten, sich vertikal erstreckende sockelartig ausgeführte Abschnitt gebildet ist, dass die drei Abschnitte dabei wenigstens drei übereinander angeordnete Lagen bilden, von denen die obere und die untere Lage aus mindestens zwei ringartig ausgeführten Schichten und die mittlere Lage(aus wenigstens einer ringartig ausgeführten Schicht gebildet ist, dass die Höhe der oberen und/oder unteren Lage kleiner als die Höhe der mittleren Lage ist, und dass die Lagen mittels wenigstens zwei vertikalen Spanngliedern mit dem zweiten Abschnitt vertikal verspannt sind.

Derartige erfindungsgemäße Fundamente sind sowohl für Betontürme wie auch für Stahltürme geeignet. Vorteilhaft dabei ist, dass bei diesem Fundament vollständig auf horizontale Verbindungsmittel verzichtet werden kann, wobei eine hinreichende Stabilität auch in extremen Belastungssituationen gegeben ist. Dieses wird überraschender Weise insbesondere durch die obere und untere Lage aus mindestens zwei ringartig ausgeführten Schichten in Verbindung mit dem Verspannen durch vorgespannte Spannglieder erreicht.

Eine weitere Lehre der Erfindung sieht vor, dass die die Höhe der oberen und unteren Lage in Summe kleiner als die Höhe der mittleren Lage ist. Hierdurch kann überraschender Weise eine optimale Lastverteilung im Fundament erreicht werden.

Eine weitere Lehre der Erfindung sieht vor, dass wenigstens eine der Schichten aus wenigstens einem vorgefertigten Element, bevorzugt aus bewehrtem Beton, besteht. Alternativ ist vorgesehen, dass wenigstens eine der Schichten aus wenigstens zwei vorgefertigten Elementen, bevorzugt aus bewehrtem Beton, besteht. Weiterhin alternativ ist vorgesehen, dass wenigstens zwei benachbarte Schichten aus wenigstens zwei vorgefertigten Elementen, bevorzugt aus bewehrtem Beton, bestehen. Hierdurch wird die standardisierte Errichtung des Fundaments erleichtert und die notwendige Anzahl von Transporten zur Baustelle insbesondere von Ortbeton reduziert.

Dabei ist vorteilhaft, dass die wenigstens zwei Elemente gestoßen angeordnet sind und ohne horizontale Befestigungsmittel in den vertikalen Fugen zwischen den wenigstens zwei Elementen die ringartig ausgeführte Schicht bilden. Dabei ist vorteilhaft, dass die vertikalen Fugen spannungsfrei vorgesehen sind, und/oder dass die wenigstens zwei Elemente in den vertikalen Fugen berührungsfrei angeordnet sind. Hierdurch wird wiederum die standardisierte Errichtung des Fundaments erleichtert und gleichzeitig die Kosten niedrig gehalten, weil die vorgefertigten Bauteile im Bereich der vertikalen Stoßfugen beispielsweise bei Abständen von bis zu 3 cm, mit im Betonbau üblichen Toleranzen bei der Herstellung gearbeitet werden kann. Überraschender Weise hat sich weiterhin gezeigt, dass bei einer derartigen Anordnung eine hinreichende Stabilität auch in extremen Belastungssituationen im Fundament gegeben ist.

Vorteilhaft ist dabei weiterhin, dass die Stöße bzw. vertikalen Fugen zweier direkt übereinander liegender Schichten nicht fluchtend angeordnet sind. Es hat sich überraschender Weise gezeigt, dass es möglich wird, die einzelnen ringarten Schichten in einzelne Elemente zu zerlegen und gleichzeitig eine hinreichende Stabilität auch in extremen Belastungssituationen im Fundament zu erreichen.

Eine weitere Lehre der Erfindung sieht vor, dass die vorgefertigten Elemente des ersten und/oder zweiten Abschnittes im Wesentlichen ohne horizontale Verbindungmittel untereinander verbunden angeordnet sind, bevorzugt mit vertikalem Abstand zwischen den vorgefertigten Elementen.

Eine weitere Lehre der Erfindung sieht vor, dass die vorgefertigten Elemente der unteren und/oder oberen Schicht eine verstärkte Bewehrung in Normalrichtung (Zug-/Druckbewehrung) aufweist und/oder dass die vorgefertigten Elemente die mittlere Schicht wenigstens eine verstärkte Bewehrung zur Ableitung von Schubbelastungen, insbesondere in radiale Richtung, aufweist Das Vorsehen der Bewehrungen in der zuvor beschrieben weise ermöglicht, einen kostengünstigen Aufbau des Fundaments.

Eine weitere Lehre der Erfindung sieht vor, dass wenigstens eine horizontale Fuge zwischen den vorgefertigten Elementen des ersten und/oder zweiten Abschnittes ortbetonfrei und/oder mörtelfrei aufeinander angeordnet sind. Es hat sich gezeigt, dass das Bereitstellen von horizontalen Berührungen der vorgefertigten Elemente bei hinreichend genau Fertigung (kleine Toleranzen in horizontaler Richtung der vorgefertigten Elemente) hinreichend Reibung in die horizontalen Fugen durch die Vorspannung bewirkt wird, so dass im Fundament eine hinreichende Stabilität selbst bei extremen Belastungssituation gegeben ist.

Eine weitere Lehre der Erfindung sieht vor, dass die Vorspannung durch die wenigstens zwei Spannglieder so ausgelegt ist, dass alle horizontalen Fugen zwischen den Schichten in jedem Betriebszustand und in jedem extremen Lastzustand der Windkraftanlage unter Druck stehen. Hierdurch wird auf besonders einfache Weise insbesondere in den horizontalen Fugen zwischen den vorgefertigten Elementen eine hinreichende Reibung der vorgefertigten Elemente bewirkt, so dass das Fundament auch ohne stoffschlüssige Verbindungen den horizontalen Fugen eine hinreichende Stabilität selbst bei extremen Belastungssituation gegeben ist.

Eine weitere Lehre der Erfindung sieht vor, dass wenigstens zwei ringartig ausgeführte Widerlager, bevorzugt in Form von wenigstens einem Widerlagerring, vorgesehen sind, gegen die die Spannglieder wirken, wobei wenigstens ein Widerlager auf der Oberseite des ersten Abschnitts und wenigstens ein Widerlager auf der Unterseite des dritten Abschnitts angeordnet ist. Hierdurch wird auf einfache Weise das notwendige Belastungswiderlager für die Spannglieder und die darüber eingeleitete Vorspannung gegeben. Dabei ist vorteilhaft, dass wenigstens ein Widerlager und/oder wenigstens ein Widerlagerring aus wenigstens zwei vorgefertigten Elementen besteht, die stoßend zur Ausfertigung des ringartigen Widerlagers und/oder Widerlagerrings angeordnet sind. Hierdurch wird der Transport von den vorgefertigten Elementen erleichtert. Weiterhin ist dabei vorteilhaft, dass wenigstens ein Widerlager wenigstens zwei übereinander angeordneten Schichten aufweist. Hierdurch wird es möglich in Abhängigkeit der eingeleiteten Vorspannung standardisiert das Fundament zu errichten. Weiterhin ist dabei vorteilhaft, dass das die Schichten jeweils wenigstens zwei Elemente aufweisen, die gestoßen angeordnet sind, wobei die Stöße zweier direkt übereinander liegender Schichten nicht fluchtend angeordnet sind. Hierdurch werden aufwändige Schweißarbeiten vor Ort auf der Baustelle vermieden und es die Errichtungszeit des Fundaments reduziert. Weiterhin wird es auf einfache Weise möglich, die Lasten der Vorspannung über das so konstruierte Widerlager adäquat in Abhängigkeit der Fundamentauslegung abzuleiten

Eine weitere Lehre der Erfindung sieht vor, dass der zweite Abschnitt aus wenigstens drei Horizontalelementen gebildet ist, und dass die Horizontalelemente in Abhängigkeit von den Parametern des zu errichtenden Turmes, insbesondere dem Turmradius, anordbar sind. Dabei ist vorteilhaft, dass die Horizontalelemente seitlich beabstandet zueinander angeordnet sind, oder dass die Horizontalelemente seitlich parallel beabstandet zueinander angeordnet sind. Hierdurch ist es auf besonders einfache Weise möglich, ein Fundament in Abhängigkeit der Maße des zu errichtenden Turms bereitzustellen. Insbesondere ist es möglich, mit einem Horizontalelementtyp Fundamente für unterschiedliche Turmradien zu erstellen, indem die Horizontalelemente entsprechend parallel verschoben werden.

Eine weitere Lehre der Erfindung sieht vor, dass die Elemente der wenigstens drei Lagen des ersten Abschnitts wenigstens zwei im Wesentlichen vertikalen Durchbrüche aufweisen, in denen jeweils ein Spannglied, bevorzugt eine Gewindestange oder ein Ankerbolzen mit Konterelementen, angeordnet ist. Hierdurch ist es auf besonders einfache Weise möglich, dass Fundament kostengünstig und schnell bereitzustellen. Bei der Bereitstellung der Durchbrüche ist ein genaues Arbeiten mit lediglich geringen Abweichungen notwendig, damit die Spannglieder einsetzbar sind und gleichzeitig, die Montierbarkeit der vorgefertigten Elemente zu bewirken. Diese wird insbesondere durch die Vertikalen Abstände der Elemente auf besonders einfache Weise erleichtert.

Nachfolgend wird die Erfindung anhand von Ausführungsbeispielen in Verbindung mit einer Zeichnung näher erläutert. Dabei zeigen:
- Fig. 1: eine Schnittansicht einer bevorzugten Ausführungsform eines erfindungsgemäßen Fundaments
- Fig. 2: eine räumliche Ansicht zu Fig. 1,
- Fig. 3: eine Draufsicht zu Fig. 1,
- Fig. 4a bis 4e: Ansichten zu einem erfindungsgemäßen Horizontalelement,
- Fig. 5a: eine Draufsicht auf angeordnete Flächenelemente des erfindungsgemäßen Fundaments,
- Fig. 5b: eine Detailansicht zu Fig. 5a,
- Fig 6a bis 8b: Ansichten zu erfindungsgemäßen Sockelsegmenten in Draufsicht und als räumliche Ansicht,
- Fig 9: eine Draufsicht auf einen erfindungsgemäßen oberen Widerlagering als oberer und/oder unterer Anschluss für die Spannglieder des erfindungsgemäßen Fundaments,
- Fig. 10,: eine abstrahierte räumliche Detailansicht zu Fig. 11,
- Fig. 11: eine Schnittansicht durch deine Ausführungsform von oberem und unterem Widerlagerring nach Fig. 9 mit montierten Spanngliedern,
- Fig. 12a, 12b: eine Draufsicht und eine Seitenansicht einer erfindungsgemäßen Abdeckplatte, und
- Fig. 13a bis 13d: unterschiedliche Anordnungsmöglichkeiten zu Fig. 5a.

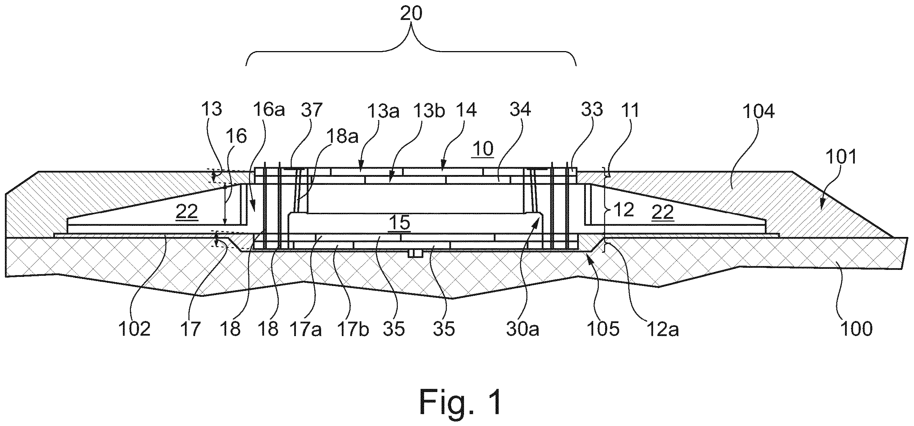

In den Fig. 1 ist in geschnittener Ansicht in einer Grube 101 im Boden 100 ggf. auf einer ggf. verdichteten Sauberkeitsschicht 102 ein erfindungsgemäßes Fundament 10 angeordnet. Das Fundament 10 weist dabei einen ersten Abschnitt 11, der auf einem, zweiten Abschnitt 12 angeordnet ist. Weiterhin ist unter dem zweiten Abschnitt 12 ein dritter Abschnitt 12a vorgesehen, der in einer Vertiefung 105 der Baugrube 101 vorgesehen ist.

Die drei Abschnitte 11, 12, 12a bilden einen Sockel 20, der wiederum aus mehreren Lagen 13, 16, 17 aufgebaut ist, wobei die Lagen 13, 16, 17 hier beispielsweise aus 5 Schichten 13a, 13b, 16a, 17a, 17b aufgebaut sind. Falls erforderlich können weiter Schichten vorgesehen werden.

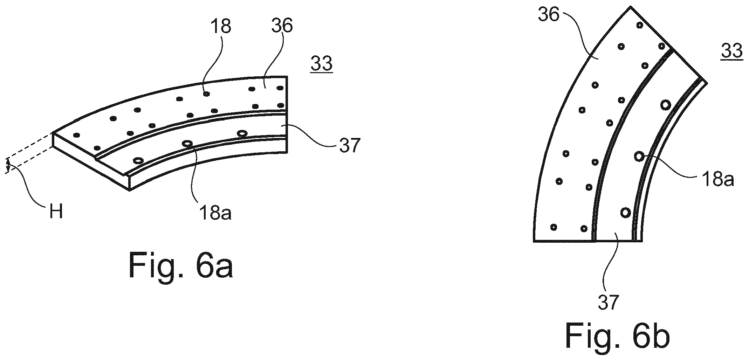

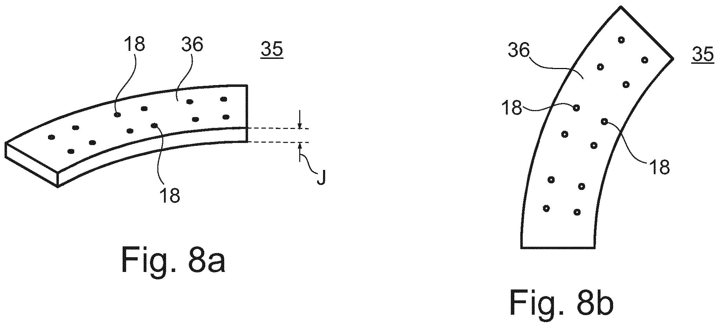

Die Schichten 13a, 13b, 17a, 17b sind aus geschlossenen Sockelabschnitten 14 aufgebaut, die wiederum aus einzelnen Sockelsegmenten 33, 34, 35 (siehe Fig. 6a bis 8b) aufgebaut sind. Die Sockelabschnitte 14 sind hier bevorzugt als Kreisringe ausgeführt sind, so dass der Sockelabschnitt 11 einen Innenraum 15 aufweist. Ein alternativer Aufbau, bspw. ein polygoner Aufbau, ist möglich.

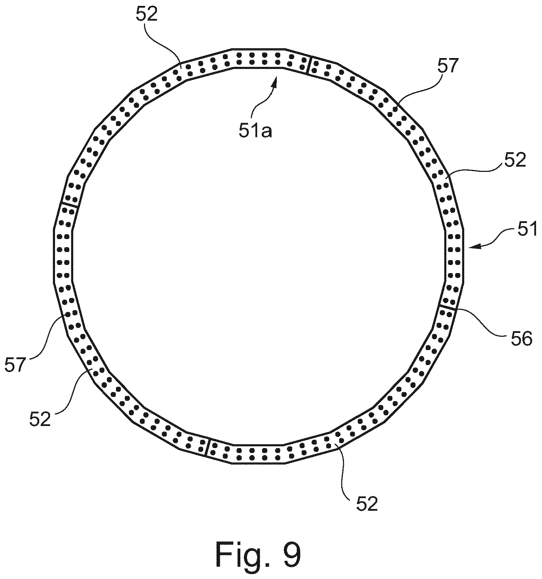

Die Lagen 13, 16, 17 setzen sich hier bevorzugt aus den einzelnen Schichten 13a, 13b, 16a, 17a, 17b zusammen, wobei die Schichten 13a, 13b, 17a, 17b selbst aus zu den Schichten passenden Sockelsegmenten 33, 34, 35 zusammengesetzt sind. Die obersten Lage 13 weist zwei Schichten 13a, 13b auf. Die obere Schicht 13a ist dabei aus Sockelsegmenten 33 beispielsweise gemäß Fig 6a, 6b mit einer Höhe H zusammengesetzt. Auf deren Oberseite 36 ist hier beispielsweise eine Vertiefungen 37 vorgesehen, in die ein Anschlussflansch für den Turm der Windkraftanlage oder direkt das unterste Segment des Turms der Windkraftanlage gestellt wird (nicht dargestellt). In den Vertiefungen 37 sind die Durchbrüche 18a für Spannglieder (nicht dargestellt des ,Turms der Windkraftanlage vorgesehen. Weiterhin sind Durchbrüche 18 für die Spannglieder 19 vorgesehen. Im Bereich der Durchbrüche 18 werden auf der Oberseite 36 beispielsweise Widerlagerflansche 51, beispielsweise gemäß Fig. 9 angeordnet, gegen die die Spannglieder 19 über die Konterelemente 21 verspannt werden.

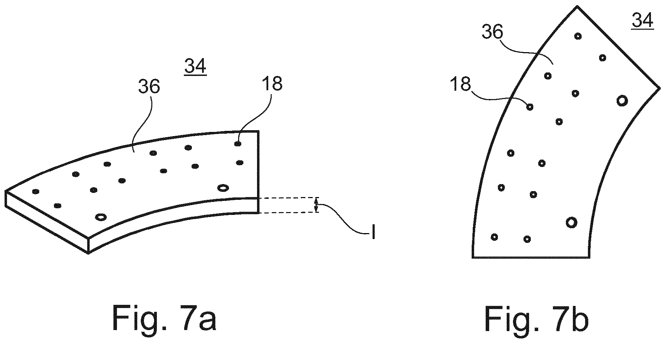

Darunter ist eine Schicht 13b vorgesehen, die aus Sockelsegmenten 34 (Fig. 7a, 7b) mit einer Höhe I zusammengesetzt ist, die ebenfalls mit Durchbrüchen 18 für die Spannglieder 19 und Durchbrüchen 18a versehen sind. Die Höhe I kann identisch zur Höhe H der Sockelsegmente 33 sein und ist bevorzugt gleich.

Darunter befindet sich die Schicht 16a als mittlere Lage 16. Diese ist gebildet aus den Köper 30 der Auflageabschnitte 25 der Horizontalsegmente 22. Diese weisen die Höhe K auf. Die Körper 30 sind ebenfalls mit Durchbrüchen 18 für die Spannglieder 19 versehen.

Hierunter vorgesehen, und damit unterhalb der Horizontalelemente 22, ist die untere Lage 17 mit den Schichten 17a, 17b, die aus Sockelsegmenten 35 mit einer Höhe J gebildet sind. Die Sockelsegmente 35 sind ebenfalls mit Durchbrüchen 18 für die Spannglieder 19 versehen.

Die Sockelsegmente 33, 34, 35 und die Körper 30 des Horizontalelements 22 sind bevorzugt hinsichtlich der Höhe H, I, J, K sehr genau ausgeführt, also mit möglichst geringen Höhenabweichungen, um eine möglichst große Auflagefläche der Sockelsegmente 33, 34, 35 und des Körpers 30 aufeinander zu bewirken, wenn diese zum Sockel 20 montiert übereinander angeordnet sind und vorgespannt sind.

Die Höhe H, I, j der Sockelsegmente 33, 35 ist dabei so ausgelegt, dass es im eingebauten Zustand im Wesentlichen lediglich auf Zug/Druck belastet wird, also eine Belastung in Normalrichtung erfährt. Hierfür ist auch die Bewehrung ausgelegt (nicht dargestellt), die im Wesentlichen aus Bewehrung in Normalrichtung besteht. Bevorzugt sind die Höhe H, I und J gleich.

Die Höhe K der Köper 30 ist dabei so ausgelegt, dass es im eingebauten Zustand im Wesentlichen lediglich auf Schub belastet wird. Hierfür kann auch die Bewehrung ausgelegt sein (nicht dargestellt), die im Wesentlichen aus Bewehrung in radialer Richtung, besonders bevorzugt in Form von Bügeln, besteht.

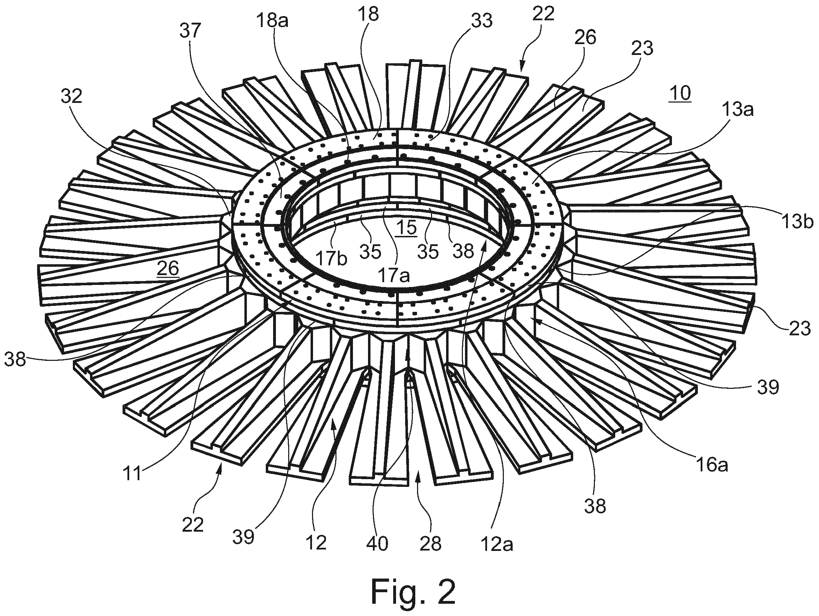

Die Anordnung der Segmente 33, 34, 35 und des Körpers 30 zu ringartigen Schichten 13a, 13b, 16a, 17a, 17b und die Anordnung Schichten 13a, 13b, 16a, 17a, 17b übereinander zu den Lagen 13, 16, 17, die dann den Sockel 20 bilden, ist in Fig. 2 räumlich dargestellt. Die Sockelsegmente 33, 34, 35 und die Körper 30 sind gestoßen nebeneinander vorgesehen, so dass zwischen diesen vertikale Fugen 38, 40 bestehen. Diese sind bevorzugt als Spalt beispielsweise mit einer Stärke von mehreren Millimetern, z.B. 30 mm, ausgeführt. Diese vertikalen Fugen 38, 40 werden bevorzugt nicht mit Mörtel oder Ortbeton gefüllt. Weiterhin werden bevorzugt keine horizontalen Verbindungsmittel vorgesehen.

Weiterhin werden die vertikalen Fugen der einzelnen Schichten 13a, 13b, 16a, 17a, 17b bevorzugt so vorgesehen, dass die vertikalen Fugen 38, 40 benachbarter Schichten 13a, 13b, 16a, 17a, 17b nicht fluchten, also nicht übereinander angeordnet sind. Wie in Fig. 2 dargestellt ist, ist es vorteilhaft, wenn die vertikalen Fugen 38 immer im Wesentlichen um den gleichen Wert im oder gegen den Uhrzeigersinn versetzt angeordnet sind.

Zwischen den Schichten 13a, 13b, 16a, 17a, 17b bestehen horizontale Fugen 39, die bevorzugt nicht mit Mörtel oder Ortbeton gefüllt werden.

Die Sockelsegmente 33, 34, 35 und die Körper 30 weisen vertikale Durchbrüche 18 auf, in denen bei der Montage des Fundaments 10 Spannglieder 19, beispielsweise Anker- oder Bewehrungsstangen 19 mit Konterelementen wie Muttern 21 in Verbindung mit Unterlegscheiben 21a vorgesehen sind, um das Fundament 10 vorzuspannen. Diese bilden zusammen mit aus Flanschblechen 52 zusammengesetzten Widerlagern 51 einen Ankerkorb (nicht dargestellt). Bestandteil des oberen Widerlager 51 kann auch der Anschlussadapter 53 für den Turm sein, wenn es sich beispielsweise bei dem Turm um einen Stahlturm handelt.

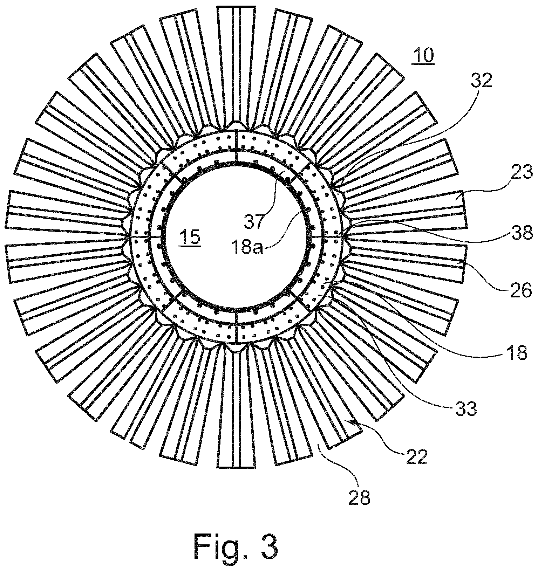

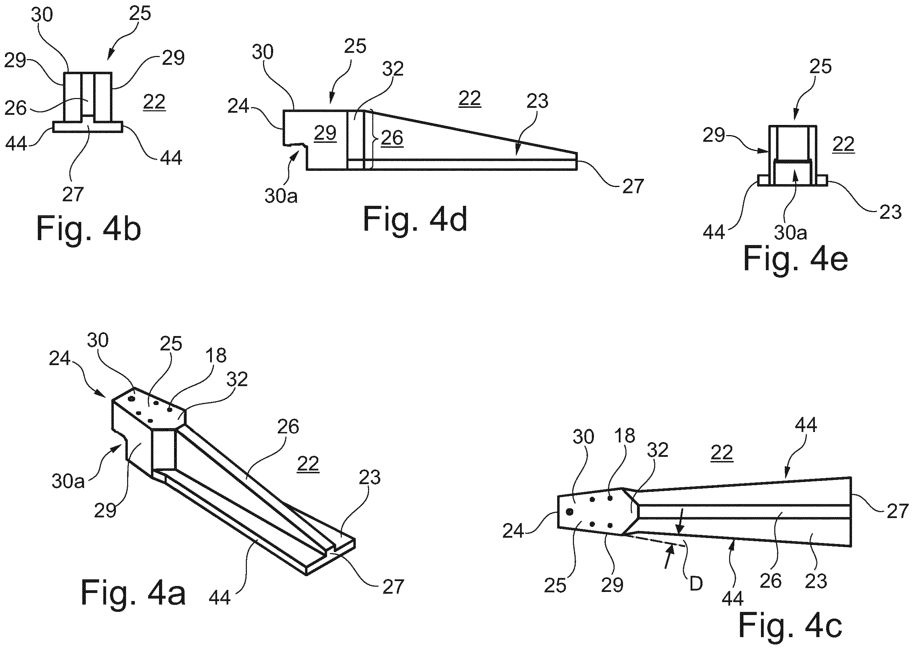

Der zweite Abschnitt 12 ist flächig ausgeführt. Alternativ kann er aber auch eine sternform realisiert werden. Eine Draufsicht auf das Fundament 10 ist in Fig. 3 gezeigt. Fig. 2 zeigt eine räumliche Ansicht des Fundaments 10. Der zweite Abschnitt 12 ist aus Horizontalelementen 22 in Form von Rippenelementen ausgeführt. Diese sind in den Fig. 4a bis 4e dargestellt. Diese erstrecken sich vom Innenraum 15 aus gesehen radial nach außen.

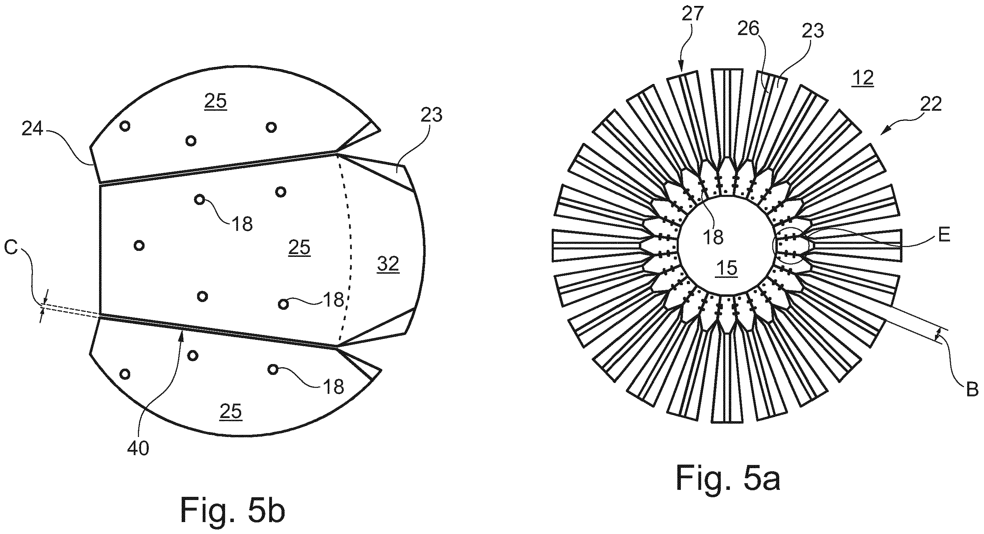

Sie weisen eine Grundplatte 23 auf, die beispielsweise trapezförmig ausgeführt ist, so dass alle zusammengesetzten Grundplatten eine polygonale Fläche bilden (siehe Fig. 3, 5a), die sich einer Kreisform annähert. Alternativ sind auch Kreissegmente oder eine Mischform aus Kreissegment und Trapezform möglich. Zwischen Seitenwänden 44 der Grundplatten 23 können bevorzugt Abstände B vorgesehen sein, die vom Durchmesser des zu errichtenden Turms abhängig sind.

Am inneren Ende 24 der Grundplatte 23 ist ein Auflagerabschnitt 25 mit einem Körper und Seitenwänden 29 vorgesehen, der im Wesentlichen bevorzugt mit dem Sockel 20 des ersten Abschnitts 11 korrespondiert. Im Auflagerabschnitt 25 können ebenfalls Durchbrüche 18 vorgesehen sein. Alternativ können fluchtend zu den Durchbrüchen 18 im ersten Abschnitt 11 Bewehrungseisen oder Ankerstangen 19 im Auflagerabschnitt 25 eingebaut sein, die sich nach außen aus dem Beton des sockelartigen Abschnitts 25 des Horizontalelements 22 heraus erstrecken. Auf dem Auflagerabschnitt 25 wird der Sockel 20 mit seinem wenigstens einen Sockelelement 14 angeordnet.

Wird ein Turm mittels Vorspannelementen (nicht dargestellt) errichtet und entsprechend verspannt, dann ist, wie hier dargestellt, es vorteilhat, eine Aussparung 30a im Körper 30 vorzusehen, um die Konterelemente der Turmvorspannung zu prüfen und bei Bedarf nachzuspannen. Die Durchbrüche 18a münden dabei bevorzugt in den Bereich der Aussparung, wie dieses hier gezeigt ist. Weiterhin sind die Durchbrüche 18a bevorzugt geneigt vorgesehen, so dass die Vorspannelemente des Turms direkt hindurchgeführt werden können.

Rechtwinklig auf der Grundplatte ist die Versteifungswand 26 angeordnet, deren Höhe beispielsweise hin zum äußeren Ende 27 der Grundplatte 23 abnimmt.

Die Grundplatte 23 ist parallelverjüngt gegenüber den Seitenflächen 29 des Körper 30 des Auflageabschnitts 25 ausgeführt. Die Parallelverjüngung 31 ist in Fig. 4c durch den Pfeil D dargestellt. Hierdurch wird bevorzugt eine Materialreduktion erreicht. Der Körper 30 weist einen Übergangsbereich 32 auf mit dem verstärkend die Versteifungswand 26 mit dem Auflagerabschnitt 25 verbunden ist.

Zwischen den Seitenflächen 29 der Auflageabschnitte 25 ist wie in Fig 5b als Ausschnitt E zu Fig. 5a dargestellt ist, bevorzugt ein Abstand C als vertikale Fuge 40 vorgesehen, wenn die horizontalen Elemente 22 angeordnet sind, der bevorzugt als Luftspalt ausgeführt ist. Dabei entstehen vertikale Fugen 40, die ebenfalls bevorzugt nicht mit Mörtel oder Ortbeton gefüllt werden. Weiterhin werden bevorzugt keine horizontalen Verbindungsmittel vorgesehen.

Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Damit die Hohlräume 28 mit Aufschüttboden 104 gefüllt werden können und dieser nicht in den Innenraum 15 eintreten kann, können Sperrelemente (nicht dargestellt), die gegen den Körper 30 des Auflageabschnitts 25 bzw. des Übergangsbereichs 32 gestellt werden.

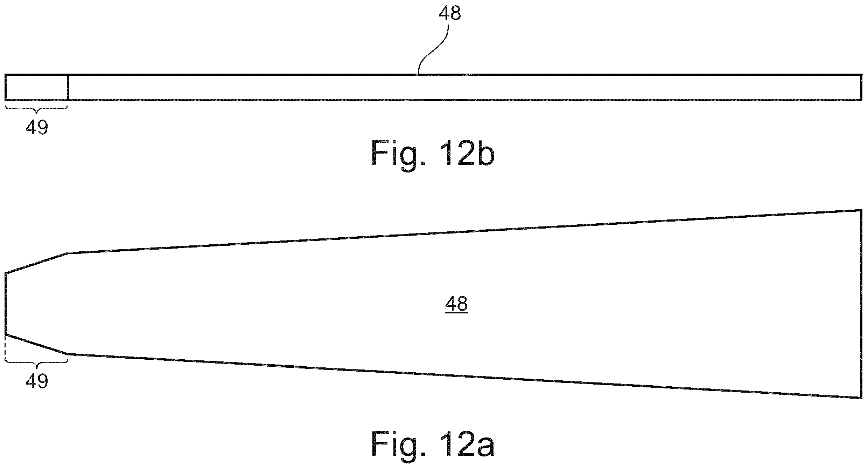

Weiterhin sind Abdeckplatten 48 (Fig. 12a, 12b) vorgesehen, die auf zwei benachbarte Grundplatten 23 aufgelegt werden, um den Abstand B zwischen zwei Seitenflächen 44 abzudecken, damit der Boden 104 nicht in den Abstand B hinein bzw. durch den Abstand B hindurch gelangen kann. Die Abdeckplatten 48 weisen einen zulaufenden Abschnitt 49 auf, der an den Übergangsbereich 32 angepasst ist. Durch die Abdeckplatte 48 kann die volle Auflast des Aufschüttboden 104 auf den zweiten Abschnitt 12 durch Einbringen in den Hohlraum 28 aufgebracht werden.

Der Innenraum 15 kann nach Fertigstellung des Fundaments 10 mit Aufschüttboden 104 verfüllt werden und mit einem Deckelelement ,(nicht dargestellt) abgedeckt werden.

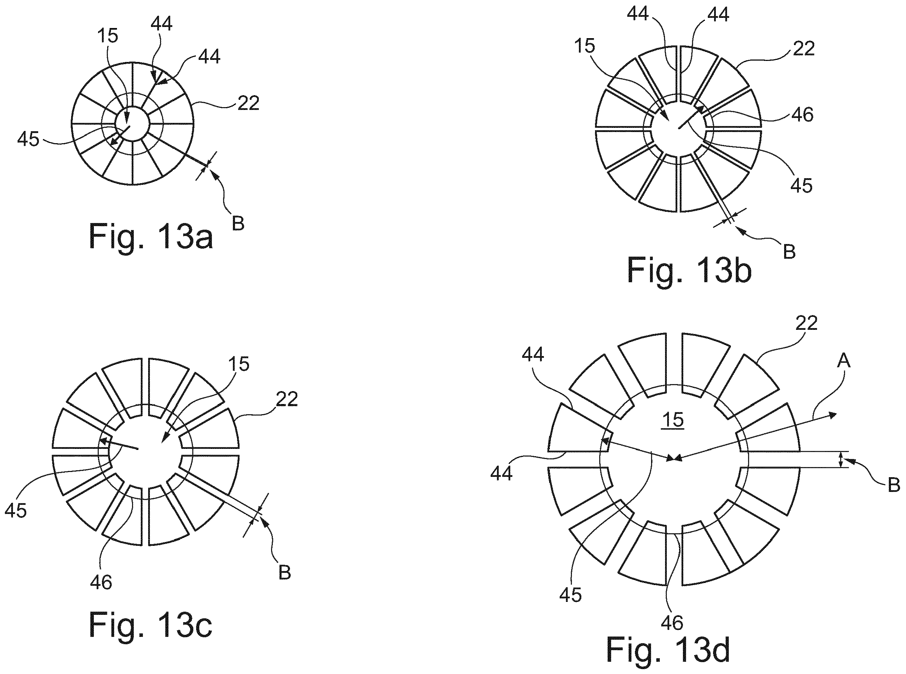

Wie in Fig. 13a bis 13d dargestellt ist, ist es möglich mit einem Horizontalelement 22 einen zweiten Abschnitt zu bilden, der unterschiedlich große Innenräume 15 aufweist, indem die Horizontalelemente 22 entlang eines vom Mittelpunkt ausgehenden Strahls nach innen oder nach außen verschoben werden, wie dieses in Fig. 13d durch den Doppelpfeil A dargestellt ist. Nach innen wird dieses dadurch begrenzt, dass sich die Seitenflächen 44 der Grundplatten 23 der Horizontalelemente 22 berühren. Nach außen ist dieses abhängig vom Radius 45 des zu errichtenden Turms, der in den Fig. 14a bis 14d durch einen Kreis 46 dargestellt ist. Der Abstand B ist bevorzugt über die gesamte Länge der Seitenflächen 44 vom inneren Ende 24 zum äußeren Ende 27 hin gleich, so dass zwei Seitenflächen 44 parallel zueinander angeordnet sind. Hierdurch können auf einfache Weise bevorzugt mit einem einzigen Horizontalelement 22 Fundamente für Türme mit unterschiedlichen Durchmessern errichtet werden.

Zum Bereitstellen der notwendigen Verspannung zwischen den Lagen 13, 16, 17 des ersten, zweiten und dritten Abschnitts 11, 12, 12a wird ein Ankerkorb (nicht dargestellt) gebildet, , der aus einem oberen und einem unteren Widerlager 51, das in Fig. 9 dargestellt ist, gebildet ist, die mit Spanngliedern 19 beispielsweise in Form von Ankerstangen oder Bewehrungsstangen und Konterelementen 21, beispielsweise Muttern, verbunden sind.

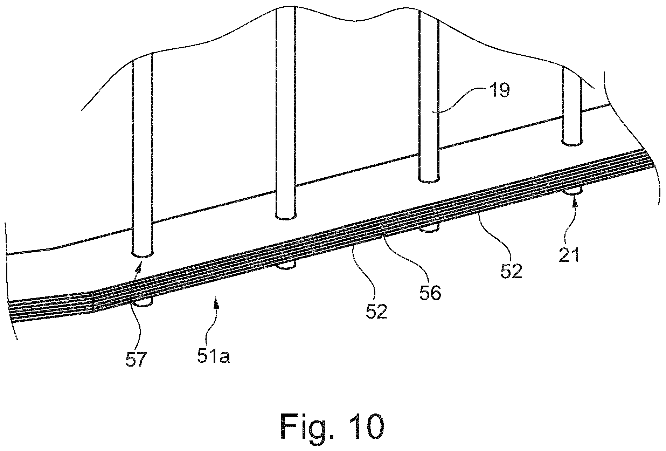

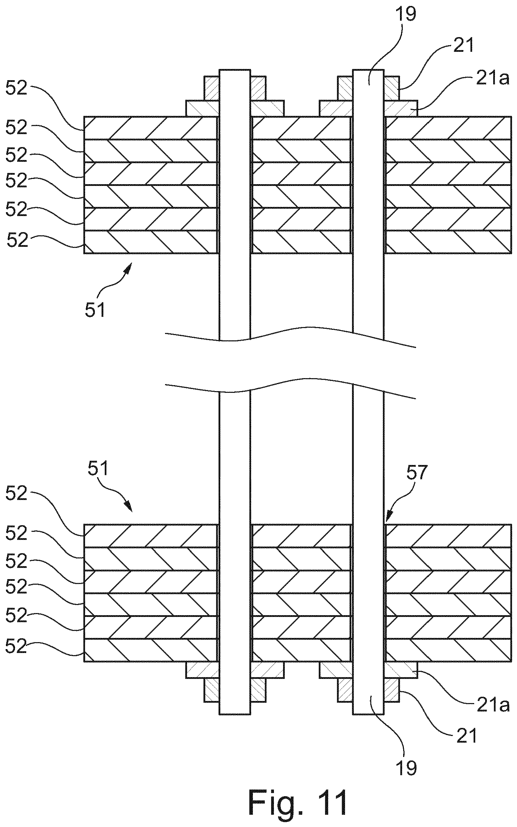

Das obere und das untere Widerlagerelement 51setzt sich dabei beispielsweise aus einem 51azusammen.Der Widerlagerring 51a kann aus einzelnen Flanschblechen 52vorgesehen werden, die gestoßen aneinander angeordnet sind, wie dieses in Fig. 10 als angedeutetem Ankerkorbausschnitt dargestellt ist, dargestellt ist. Weiterhin können auch mehrere Flanschbleche 52 übereinander angeordnet werden, wie dieses in Fig. 10 und Fig. 11 gezeigt ist. Hierbei werden diese dann bevorzugt so angeordnet, dass sich deren vertikale Fugen 56 bei benachbarten Lagen der Flanschbleche 52 nicht überlappen. Bevorzugt werden die Flanschbleche 52 nicht miteinander verschweißt, sondern liegen auf- bzw. aneinander an. Die Flanschbleche 52 weisen Durchbrüche 57 auf und können mit unterschiedlichen Breiten und unterschiedlichen Anzahlen von Reihen von Durchbrüche 57 pro Flanschblech 52, 55 vorgesehen werden.

Bevorzugt kann der Widerlagerring 51b integral mit dem Anschlussadapter 53 als ein Flanschblech 52 ausgeführt sein.

**Bezugszeichenliste**

| | | | |
|---|---|---|---|
| 10 | Fundament | 34 | mittleres Sockelsegment |
| 11 | erster Abschnitt | 35 | Sockelsegment |
| 12 | zweiter Abschnitt | 36 | Oberseite |
| 12a | dritter Abschnitt | 37 | Vertiefung |
| 13 | obere Lage | 38 | vertikale Fuge |
| 13a | Schicht | 39 | horizontale Fuge |
| 13b | Schicht | 40 | vertikale Fuge |
| 14 | Sockelabschnitt | 44 | Seitenfläche |
| 15 | Innenraum | 45 | Radius |
| 16 | mittlere Lage | 46 | Kreis |
| 16a | Schicht | 48 | Abdeckplatte |
| 17 | untere Lage | 49 | zulaufender Abschnitt |
| 17a | Schicht | 51 | Widerlager |
| 17b | Schicht | 52 | Flanschblech |
| 18 | Durchbruch | 56 | vertikale Fuge |
| 19 | Spannglied/Ankerstangen | 100 | Boden |
| 20 | Sockel | 101 | Baugrube |
| 21 | Konterelement/Mutter | 102 | Sauberkeitsschicht |
| 21a | Unterlegscheibe | 104 | Aufschüttboden |
| 22 | Horizontalelement/ Rippenelement | 105 | Vertiefung |
| | | A | Verschieberichtung |
| 23 | Grundplatte | B | Abstand |
| 24 | Inneres Ende | C | Abstand |
| 25 | Auflagerabschnitt | D | Pfeil der Parallelverjüngung |
| 26 | Versteifungswand | E | Ausschnitt |
| 27 | äußeres Ende | H | Höhe |
| 28 | Hohlraum | I | Höhe |
| 29 | Seitenfläche | J | Höhe |
| 30 | Körper | K | Höhe |
| 30a | Aussparung | | |
| 31 | Parallelverjüngung | | |
| 32 | Übergangsbereich | | |
| 33 | obere Sockelsegment | | |

## Patentansprüche

1. Fundament für eine Windkraftanlage, wobei das Fundament (10) im Wesentlichen vorgefertigte Elemente, bevorzugt aus bewehrtem Beton, aufweist, mit einem ersten, sich vertikal erstreckenden sockelartig ausgeführten Abschnitt (11), auf dem ein Turm der Windkraftanlage anordbar ist, mit einem zweiten sich im Wesentlichen horizontal erstreckenden Abschnitt (12) als Fundamentkörper, der sich in Kontakt mit dem Boden (100) befindet, der wenigstens zwei Horizontalelemente (22) mit wenigstens einem Auflagerabschnitt (25) an seinem inneren Ende aufweist, wobei der erste Abschnitt (11) oberhalb der wenigsten zwei Auflagerabschnitte (25) des zweiten Abschnitts (12) angeordnet ist, und mit einem dritten Abschnitt (12a) der unterhalb der wenigsten zwei Auflagerabschnitte (25) des zweiten Abschnitts (12) angeordnet ist, **dadurch gekennzeichnet, dass** ein Sockel (20) vorgesehen ist, der wenigstens aus dem ersten, sich vertikal erstreckende sockelartig ausgeführte Abschnitt (11), aus den wenigstens zwei Auflagerabschnitten (25) des zweiten Abschnitts (12) und aus dem dritten, sich vertikal erstreckende sockelartig ausgeführte Abschnitt (12a) gebildet ist, dass die drei Abschnitte (11, 12, 12a) dabei wenigstens drei übereinander angeordnete Lagen (13, 16, 17) bilden, von denen die obere und die untere Lage (13, 17) aus mindestens zwei ringartig ausgeführten Schichten (13a, 13b, 17a, 17b) und die mittlere Lage (16) aus wenigstens einer ringartig ausgeführten Schicht (16a) gebildet ist, dass die Höhe (H+I, 2x J) der oberen und/oder unteren Lage (13, 17) kleiner als die Höhe (K) der mittleren Lage (16) ist, und dass die Lagen (13, 16, 17) mittels wenigstens zwei vertikalen Spanngliedern (19) mit dem zweiten Abschnitt (12) vertikal verspannt sind.

2. Fundament nach Anspruch 1, **dadurch gekennzeichnet, dass** die die Höhe (H+I, 2x J) der oberen und unteren Lage (13, 17) in Summe kleiner als die Höhe (K) der mittleren Lage (16) ist.

3. Fundament nach Anspruch 1 oder 2, **dadurch gekennzeichnet, dass** wenigstens eine der Schichten (13a, 13b, 16, 17a, 17b) aus wenigstens einem vorgefertigten Element (30, 33, 34,35), bevorzugt aus bewehrtem Beton, besteht.

4. Fundament nach Anspruch 1 oder 2, **dadurch gekennzeichnet, dass** wenigstens eine der Schichten (13a, 13b, 16, 17a, 17b) aus wenigstens zwei vorgefertigten Elementen, bevorzugt aus bewehrtem Beton, besteht.

5. Fundament nach Anspruch 1 oder 2, **dadurch gekennzeichnet, dass** wenigstens zwei benachbarte Schichten (13a, 13b, 16, 17a, 17b) aus wenigstens zwei vorgefertigten Elementen (30, 33, 34, 35), bevorzugt aus bewehrtem Beton, bestehen.

6. Fundament nach Anspruch 4 oder 5, **dadurch gekennzeichnet, dass** die wenigstens zwei Elemente (30, 33, 34, 35) gestoßen angeordnet sind und ohne horizontale Befestigungsmittel in den vertikalen Fugen (38) zwischen den wenigstens zwei Elementen (30, 33, 34, 35) die ringartig ausgeführte Schicht (13a, 13b, 16, 17a, 17b) bilden.

7. Fundament nach Anspruch 6, **dadurch gekennzeichnet, dass** die vertikalen Fugen (38) spannungsfrei vorgesehen sind.

8. Fundament nach Anspruch 6 oder 7, **dadurch gekennzeichnet, dass** die wenigstens zwei Elemente (30, 33, 34, 35) in den vertikalen Fugen (38) berührungsfrei angeordnet sind.

9. Fundament nach einem der Ansprüche 5 bis 8, **dadurch gekennzeichnet, dass** die Stöße bzw. vertikalen Fugen (38) zweier direkt übereinander liegender Schichten (13a, 13b, 16, 17a, 17b) nicht fluchtend angeordnet sind.

10. Fundament nach einem der Ansprüche 1 bis 9, **dadurch gekennzeichnet, dass** die vorgefertigten Elemente (22, 33, 34, 35) des ersten und/oder zweiten Abschnittes (11, 12) ohne horizontale Verbindungmittel untereinander verbunden angeordnet sind.

11. Fundament nach einem der Ansprüche 1 bis 10, **dadurch gekennzeichnet, dass** die vorgefertigten Elemente (22, 33, 34, 35) des ersten und/oder zweiten Abschnittes (11, 12) in den vertikalen Fugen (38, 40) spannungsfrei und/oder berührungsfrei angeordnet sind.

12. Fundament nach einem der Ansprüche 1 bis 11, **dadurch gekennzeichnet, dass** die vorgefertigten Elemente (33, 35) der unteren und/oder oberen Schicht (13a, 13b, 17a, 17b) eine verstärkte Bewehrung in Normalrichtung (Zug-/Druckbewehrung) aufweist und/oder dass die vorgefertigten Elemente (34) die mittlere Schicht (16a) wenigstens eine verstärkte Bewehrung zur Ableitung von Schubbelastungen, insbesondere in radiale Richtung, aufweist.

13. Fundament nach einem der Ansprüche 1 bis 12, **dadurch gekennzeichnet, dass** wenigstens eine horizontale Fuge (38, 40) zwischen den vorgefertigten Elementen des ersten und/oder zweiten Abschnittes (11, 12) ortbetonfrei und/oder mörtelfrei aufeinander angeordnet sind.

14. Fundament nach einem der Ansprüche 1 bis 13, **dadurch gekennzeichnet, dass** die Vorspannung durch die wenigstens zwei Spannglieder (19) so ausgelegt ist, dass alle horizontalen Fugen (39) zwischen den Schichten (13a, 13b, 16, 17a, 17b) in jedem Betriebszustand und in jedem extremen Lastzustand der Windkraftanlage unter Druck stehen.

15. Fundament nach einem der Ansprüche 1 bis 14, **dadurch gekennzeichnet, dass** wenigstens zwei ringartig ausgeführte Widerlager (51), bevorzugt in Form von wenigstens einem Widerlagerring (51a), vorgesehen sind, gegen die die Spannglieder (19) wirken, wobei wenigstens ein Widerlager (51) auf der Oberseite des ersten Abschnitts (11) und wenigstens ein Widerlager (54) auf der Unterseite des dritten Abschnitts (12a) angeordnet ist.

16. Fundament nach Anspruch 15, **dadurch gekennzeichnet, dass** das wenigstens ein Widerlager (51) und/oder ein Widerlagerring (51) aus wenigstens zwei vorgefertigten Elementen (52) besteht, die stoßend zur Ausfertigung des ringartigen Widerlagers (51) und/oder des Widerlagerrings (51a) angeordnet sind.

17. Fundament nach Anspruch 15 oder 16, **dadurch gekennzeichnet, dass** wenigstens ein Widerlager (51) und/oder ein Widerlagerring (51a) wenigstens zwei übereinander angeordneten Schichten aufweist.

18. Fundament nach Anspruch 17, **dadurch gekennzeichnet, dass** das die Schichten jeweils wenigstens zwei Elemente (52) aufweisen, die gestoßen angeordnet sind, wobei die Stöße zweier direkt übereinander liegender Schichten nicht fluchtend angeordnet sind.

19. Fundament nach einem der Ansprüche 1 bis 18, **dadurch gekennzeichnet, dass** die Elemente der wenigstens drei Lagen des ersten Abschnitts (11) wenigstens zwei im Wesentlichen vertikalen Durchbrüche (18) aufweisen, in denen jeweils ein Spannglied (19), bevorzugt eine Gewindestange oder ein Ankerbolzen mit Konterelementen (21), angeordnet ist.

## Claims

1. Foundation for a wind turbine, wherein the foundation (10) has substantially prefabricated elements, preferably composed of reinforced concrete, having a first, vertically extending pedestal-like section (11), on which a tower of the wind turbine is able to be arranged, having a second, substantially horizontally extending section (12) as a foundation body, which is in contact with the ground (100) and has at least two horizontal elements (22) with at least one bearing section (25) at the inner end thereof, wherein the first section (11) is arranged above the at least two bearing sections (25) of the second section (12), and having a third section (12a), which is arranged below the at least two bearing sections (25) of the second section (12), **characterized in that** provision is made of a pedestal (20) which is formed at least from the first, vertically extending pedestal-like section (11), from the at least two bearing sections (25) of the second section (12) and from the third, vertically extending pedestal-like section (12a), **in that** the three sections (11, 12, 12a) form at least three tiers (13, 16, 17) which are arranged one above the other and of which the upper and lower tiers (13, 17) are formed from at least two ring-like layers (13a, 13b, 17a, 17b) and the middle tier (16) is formed from at least one ring-like layer (16a), **in that** the height (H+I, 2x J) of the upper and/or lower tier (13, 17) is smaller than the height (K) of the middle tier (16), and **in that** the tiers (13, 16, 17) are vertically braced with the second section (12) by means of at least two vertical clamping members (19).

2. Foundation according to Claim 1, **characterized in that** the sum of the heights (H+I, 2x J) of the upper and lower tiers (13, 17) is smaller than the height (K) of the middle tier (16).

3. Foundation according to Claim 1 or 2, **characterized in that** at least one of the layers (13a, 13b, 16, 17a, 17b) consists of at least one prefabricated element (30, 33, 34, 35), preferably composed of reinforced concrete.

4. Foundation according to Claim 1 or 2, **characterized in that** at least one of the layers (13a, 13b, 16, 17a, 17b) consists of at least two prefabricated elements, preferably composed of reinforced concrete.

5. Foundation according to Claim 1 or 2, **characterized in that** at least two adjacent layers (13a, 13b, 16, 17a, 17b) consist of at least two prefabricated elements (30, 33, 34, 35), preferably composed of reinforced concrete.

6. Foundation according to Claim 4 or 5, **characterized in that** the at least two elements (30, 33, 34, 35) are arranged in a butting manner and form the ring-like layer (13a, 13b, 16, 17a, 17b) without horizontal fastening means in the vertical joints (38) between the at least two elements (30, 33, 34, 35).

7. Foundation according to Claim 6, **characterized in that** the vertical joints (38) are provided in a stress-free manner.

8. Foundation according to Claim 6 or 7, **characterized in that** the at least two elements (30, 33, 34, 35) are arranged without contact in the vertical joints (38).

9. Foundation according to one of Claims 5 to 8, **characterized in that** the butting means or vertical joints (38) of two layers (13a, 13b, 16, 17a, 17b) situated directly one above the other are not arranged in an aligned manner.

10. Foundation according to one of Claims 1 to 9, **characterized in that** the prefabricated elements (22, 33, 34, 35) of the first and/or second section (11, 12) are arranged in a manner interconnected without any horizontal connecting means.

11. Foundation according to one of Claims 1 to 10, **characterized in that** the prefabricated elements (22, 33, 34, 35) of the first and/or second section (11, 12) are arranged in a stress-free manner and/or without contact in the vertical joints (38, 40).

12. Foundation according to one of Claims 1 to 11, **characterized in that** the prefabricated elements (33, 35) of the lower and/or upper layer (13a, 13b, 17a, 17b) have a strengthened reinforcement in the normal direction (tensile/compressive reinforcement), and/or **in that** the prefabricated elements (34) of the middle layer (16a) have at least one strengthened reinforcement for diverting shear loads, in particular in the radial direction.

13. Foundation according to one of Claims 1 to 12, **characterized in that** at least one horizontal joint (38, 40) is arranged between the prefabricated elements of the first and/or second section (11, 12) in a manner in-situ-concrete-free and/or mortar-free one on top of the other.

14. Foundation according to one of Claims 1 to 13, **characterized in that** the prestressing by the at least two clamping members (19) is configured in such a way that all the horizontal joints (39) between the layers (13a, 13b, 16, 17a, 17b) are subjected to pressure in any operating state and in any extreme load state of the wind turbine.

15. Foundation according to one of Claims 1 to 14, **characterized in that** provision is made of at least two ring-like abutments (51), preferably in the form of at least one abutment ring (51a), against which the clamping members (19) act, wherein at least one abutment (51) is arranged on the top side of the first section (11) and at least one abutment (54) is arranged on the bottom side of the third section (12a).

16. Foundation according to Claim 15, **characterized in that** the at least one abutment (51) and/or abutment ring (51) consists of at least two prefabricated elements (52) which are arranged in an manner abutting for completion of the ring-like abutment (51) and/or the abutment ring (51a).

17. Foundation according to Claim 15 or 16, **characterized in that** at least one abutment (51) and/or abutment ring (51a) has at least two layers arranged one above the other.

18. Foundation according to Claim 17, **characterized in that** the layers have in each case at least two elements (52) which are arranged in a butting manner, wherein the butting means of two layers situated directly one above the other are not arranged in an aligned manner.

19. Foundation according to one of Claims 1 to 18, **characterized in that** the elements of the at least three tiers of the first section (11) have at least two substantially vertical apertures (18) in which in each case one clamping member (19), preferably a threaded rod or an anchor bolt with locking elements (21), is arranged.

## Revendications

1. Fondation pour une éolienne, la fondation (10) présentant des éléments essentiellement préfabriqués, de préférence en béton armé, avec une première section (11) réalisée en forme de socle, s'étendant verticalement, sur laquelle une tour de l'éolienne peut être agencée, avec une deuxième section (12) s'étendant essentiellement horizontalement en tant que corps de fondation, qui se trouve en contact avec le sol (100), qui présente au moins deux éléments horizontaux (22) avec au moins une section d'appui (25) à son extrémité intérieure, la première section (11) étant agencée au-dessus des au moins deux sections d'appui (25) de la deuxième section (12), et avec une troisième section (12a) qui est agencée au-dessous des au moins deux sections d'appui (25) de la deuxième section (12), **caractérisée en ce qu'**un socle (20) est prévu, qui est formé au moins par la première section (11) réalisée en forme de socle s'étendant verticalement, par les au moins deux sections d'appui (25) de la deuxième section (12) et par la troisième section (12a) réalisée en forme de socle s'étendant verticalement, **en ce que** les trois sections (11, 12, 12a) forment au moins trois strates (13, 16, 17) agencées les unes au-dessus des autres, dont la strate supérieure et la strate inférieure (13, 17) sont formées d'au moins deux couches réalisées sous forme annulaire (13a, 13b, 17a, 17b) et la strate centrale (16) est formée d'au moins une couche réalisée sous forme annulaire (16a), **en ce que** la hauteur (H+I, 2x J) de la strate supérieure et/ou inférieure (13, 17) est inférieure à la hauteur (K) de la strate centrale (16), et **en ce que** les strates (13, 16, 17) sont serrées verticalement avec la deuxième section (12) au moyen d'au moins deux organes de serrage verticaux (19).

2. Fondation selon la revendication 1, **caractérisée en ce que** la somme des hauteurs (H+I, 2x J) des strates supérieure et inférieure (13, 17) est inférieure à la hauteur (K) de la strate centrale (16).

3. Fondation selon la revendication 1 ou 2, **caractérisée en ce qu'**au moins une des couches (13a, 13b, 16, 17a, 17b) est constituée d'au moins un élément préfabriqué (30, 33, 34, 35), de préférence en béton armé.

4. Fondation selon la revendication 1 ou 2, **caractérisée en ce qu'**au moins une des couches (13a, 13b, 16, 17a, 17b) est constituée d'au moins deux éléments préfabriqués, de préférence en béton armé.

5. Fondation selon la revendication 1 ou 2, **caractérisée en ce qu'**au moins deux couches voisines (13a, 13b, 16, 17a, 17b) sont constituées d'au moins deux éléments préfabriqués (30, 33, 34, 35), de préférence en béton armé.

6. Fondation selon la revendication 4 ou 5, **caractérisée en ce que** les au moins deux éléments (30, 33, 34, 35) sont agencés bout à bout et forment, sans moyens de fixation horizontaux, dans les joints verticaux (38) entre les au moins deux éléments (30, 33, 34, 35), la couche (13a, 13b, 16, 17a, 17b) réalisée sous forme annulaire.

7. Fondation selon la revendication 6, **caractérisée en ce que** les joints verticaux (38) sont prévus sans contrainte.

8. Fondation selon la revendication 6 ou 7, **caractérisée en ce que** les au moins deux éléments (30, 33, 34, 35) sont agencés sans contact dans les joints verticaux (38).

9. Fondation selon l'une quelconque des revendications 5 à 8, **caractérisée en ce que** les aboutages ou joints verticaux (38) de deux couches (13a, 13b, 16, 17a, 17b) situées directement l'une au-dessus de l'autre ne sont pas agencés en alignement.

10. Fondation selon l'une quelconque des revendications 1 à 9, **caractérisée en ce que** les éléments préfabriqués (22, 33, 34, 35) de la première et/ou de la deuxième section (11, 12) sont agencés de manière à être reliés entre eux sans moyens de liaison horizontaux.

11. Fondation selon l'une quelconque des revendications 1 à 10, **caractérisée en ce que** les éléments préfabriqués (22, 33, 34, 35) de la première et/ou de la deuxième section (11, 12) sont agencés dans les joints verticaux (38, 40) sans contrainte et/ou sans contact.

12. Fondation selon l'une quelconque des revendications 1 à 11, **caractérisée en ce que** les éléments préfabriqués (33, 35) de la couche inférieure et/ou supérieure (13a, 13b, 17a, 17b) présentent une armature renforcée dans la direction normale (armature de traction/compression) et/ou **en ce que** les éléments préfabriqués (34) de la couche centrale (16a) présentent au moins une armature renforcée pour la dérivation de sollicitations de cisaillement, notamment dans la direction radiale.

13. Fondation selon l'une quelconque des revendications 1 à 12, **caractérisée en ce qu'**au moins un joint horizontal (38, 40) entre les éléments préfabriqués de la première et/ou de la deuxième section (11, 12) est agencé l'un sur l'autre sans béton en place et/ou sans mortier.

14. Fondation selon l'une quelconque des revendications 1 à 13, **caractérisée en ce que** la précontrainte par les au moins deux organes de serrage (19) est telle que tous les joints horizontaux (39) entre les couches (13a, 13b, 16, 17a, 17b) sont sous pression dans toutes les conditions de fonctionnement et dans tous les états de charge extrêmes de l'éolienne.

15. Fondation selon l'une quelconque des revendications 1 à 14, **caractérisée en ce qu'**il est prévu au moins deux contre-appuis (51) réalisés sous forme annulaire, de préférence sous la forme d'au moins un anneau de contre-appui (51a), contre lesquelles agissent les organes de serrage (19), au moins un contre-appui(51) étant agencé sur le côté supérieur de la première section (11) et au moins un contre-appui (54) sur le côté inférieur de la troisième section (12a).

16. Fondation selon la revendication 15, **caractérisée en ce que** l'au moins un contre-appui (51) et/ou un anneau de contre-appui (51) est constitué d'au moins deux éléments préfabriqués (52) qui sont agencés bout à bout pour réaliser le contre-appui annulaire (51) et/ou l'anneau de contre-appui (51a).

17. Fondation selon la revendication 15 ou 16, **caractérisée en ce qu'**au moins un contre-appui (51) et/ou un anneau de contre-appui (51a) présente au moins deux couches agencées en superposition.

18. Fondation selon la revendication 17, **caractérisée en ce que** les couches présentent chacune au moins deux éléments (52) qui sont agencés bout à bout, les aboutages de deux couches situées directement l'une au-dessus de l'autre n'étant pas agencés en alignement.

19. Fondation selon l'une quelconque des revendications 1 à 18, **caractérisée en ce que** les éléments des au moins trois strates de la première section (11) présentent au moins deux ajours (18) essentiellement verticaux dans chacun desquels est agencé un organe de serrage (19), de préférence une tige filetée ou un boulon d'ancrage avec des éléments de blocage (21).
